# EUROPÄISCHE PATENTANMELDUNG

(11) **EP 3 261 199 A1**
(43) Veröffentlichungstag der Anmeldung: **27.12.2017**
(21) Anmeldenummer: 16176015.2
(22) Anmeldetag: 23.06.2016
(51) Int. Cl.: H01T 13/54

(54) **VORKAMMERZÜNDKERZE UND VERFAHREN ZUM BETREIBEN EINER VORKAMMERZÜNDKERZE**

(71) Anmelder: Fuelsave GmbH, 69190 Walldorf (DE)
(72) Erfinder: Hoffmann, Dirk, 21244 Buchholz i.d.N. (DE)
(74) Vertreter: Ridderbusch, Oliver

(57) **Zusammenfassung**

Eine Vorkammerzündkerze umfasst eine Zündeinrichtung (1, 2) zum Entflammen eines Kraftstoffgemisches und ein Vorkammergehäuse (5), welches einen Innenraum (4) bildet, in welchem die Zündeinrichtung (1, 2) angeordnet ist. Mehrere Überströmkanäle (10) sind in dem Vorkammergehäuse (5) gebildet und verlaufen jeweils von einer Gehäuseinnenseite (6) bis zu einer Gehäuseaußenseite (7). Jeder Überströmkanal (10) hat eine jeweilige Bohrungsachse (12), deren Ausrichtung durch einen Azimutwinkel (a) und einen Polarwinkel (b) definiert wird. Der Azimutwinkel (a) ist in einer Ebene senkrecht zu einer Längsachse (18, 20) des Vorkammergehäuses (5) definiert als ein Winkel der Bohrungsachse (12) zur Flächennormalen (21) der Gehäuseinnenseite (6). Der Polarwinkel (b) ist als Winkel zwischen der Längsachse (18, 20) des Vorkammergehäuses (5) und der Bohrungsachse (12) definiert. Der Azimutwinkel (a) beträgt zwischen 15° und 42° und der Polarwinkel (b) beträgt zwischen 50° und 70°. Beschrieben wird außerdem ein Verfahren zum Betreiben einer solchen Vorkammerzündkerze.

## Beschreibung

Die vorliegende Erfindung bezieht sich in einem ersten Aspekt auf eine Vorkammerzündkerze nach dem Oberbegriff des Anspruchs 1. In einem zweiten Gesichtspunkt betrifft die Erfindung ein Verfahren zum Betreiben einer Vorkammerzündkerze nach dem Oberbegriff des Anspruchs 7.

Vorkammerzündkerzen werden allgemein bei Verbrennungsmotoren zum Entflammen eines Kraftstoffgemisches eingesetzt. Die Verbrennungsmotoren können grundsätzlich beliebiger Art sein und können insbesondere Ottomotoren sein. Ebenso können die Kraftstoffgemische weitgehend beliebig sein und können beispielsweise ein Benzin-Gas-Gemisch oder Erdgas, Öl oder Wasserstoffgas, insbesondere gemischt mit Sauerstoffgas oder Umgebungsluft, umfassen.

Zum Entflammen eines Kraftstoffgemisches umfasst eine gattungsgemäße Vorkammerzündkerze eine Zündeinrichtung. Meist ist diese durch mehrere Elektroden gebildet, zwischen denen bei Anlegen einer Zündspannung eine Funkenstrecke gebildet wird; entlang dieser Funkenstrecke entzündet sich das Kraftstoffgemisch.

Gattungsgemäße Vorkammerzündkerzen umfassen zudem ein Vorkammergehäuse, welches einen Innenraum bildet, in dem die Zündeinrichtung angeordnet ist. Hierdurch unterscheiden sich Vorkammerzündkerzen von anderen Zündkerzen, die keine Vorkammerzündkerzen sind. Das Vorkammergehäuse trennt die Zündeinrichtung von einem umgebenden Brennraum eines Verbrennungsmotors.

Der Innenraum des Vorkammergehäuses wird mit einer Umgebung der Vorkammerzündkerze (im Einsatz ist die Umgebung der Brennraum des Verbrennungsmotors) durch mehrere Überströmkanäle verbunden. Als Überstromkanal wird ein Kanal oder eine Bohrung verstanden, welche in dem Vorkammergehäuse gebildet ist und von einer Gehäuseinnenseite bis zu einer Gehäuseaußenseite des Vorkammergehäuses verläuft.

Wenn das Kraftstoffgemisch innerhalb des Vorkammergehäuses entzündet wird, kommt es zu einer Flammenausbreitung durch die Überströmkanäle in den Brennraum. Durch die Flammenausbreitung soll ein Kraftstoffgemisch im Brennraum möglichst vollständig verbrannt werden. Hierfür ist der Verlauf der Flammenausbreitung höchstrelevant. Dieser wird entscheidend durch die Gestaltung der Überströmkanäle bestimmt.

Von der Gestaltung der Überströmkanäle hängt außerdem wesentlich ab, wie gut die Entlüftung nach einem Zündvorgang erfolgt. In dem Arbeitstakt, in dem das verbrannte Gemisch (Abgas) aus dem Brennraum des Verbrennungsmotors abgelassen wird, soll auch das verbrannte Gemisch aus dem Innenraum der Vorkammerzündkerze möglichst vollständig entweichen. Dies erfolgt über die Überströmkanäle, weshalb deren Gestaltung maßgebend dafür ist, wie effizient Abgase aus der Vorkammerzündkerze durch ein frisches Gemisch ersetzt werden kann.

Zur Beschreibung der Orientierung eines Überströmkanals werden nachstehend geeignete Begriffe eingeführt. Jeder Überströmkanal hat eine jeweilige Bohrungsachse. Diese kann insbesondere als mittige (also entlang der Mitte des zugehörigen Überströmkanals verlaufende) Longitudinalachse des Überströmkanals angesehen werden. Die Ausrichtung der Bohrungsachse wird durch einen Azimutwinkel und einen Polarwinkel angegeben:
Der Polarwinkel ist als Winkel zwischen der Längsachse des Vorkammergehäuses und der Bohrungsachse definiert. Befinden sich beispielsweise (bei einer nicht erfindungsgemäßen Vorkammerzündkerze) die Überströmkanäle in einem zylindrischen Wandabschnitt des Vorkammergehäuses (der zylindrische Wandabschnitt ist um die Längsachse gebildet) und sind die Überströmkanäle als Bohrungen gebildet, die senkrecht auf die Zylinderwand stehen, so beträgt der Polarwinkel 90°. Bei bekannten Vorkammerzündkerzen ist der Polarwinkel häufig kleiner als 90°.

Der genannte Azimutwinkel ist in einer Ebene senkrecht zu einer Längsachse des Vorkammergehäuses definiert als ein Winkel der Bohrungsachse zur Flächennormalen der Gehäuseinnenseite. In dieser betrachteten Ebene ist der Winkel zwischen der Bohrungsachse und der Flächennormale der Gehäuseinnenseite zu verstehen als ein Winkel zwischen der Projektion der Bohrungsachse auf die genannte Ebene und der Projektion der Flächennormalen auf die genannte Ebene. Die Flächennormale der Gehäuseinnenseite kann an der Stelle der Gehäuseinnenseite zu verstehen sein, an welcher die Bohrungsachse des betrachteten Überströmkanals die Gehäuseinnenseite schneidet. Als alternative Definition kann der Azimutwinkel auch in einer Ebene senkrecht zu einer Längsachse des Vorkammergehäuses definiert sein als ein Winkel zwischen der Bohrungsachse und einer Verbindungsgeraden; die Verbindungsgerade führt von einer mittigen Längsachse des Vorkammergehäuses bis zum Überströmkanal (das heißt bis zu der Stelle der Gehäuseinnenseite, an welcher die Bohrungsachse des Überströmkanals die Gehäuseinnenseite schneidet).

Bei einfachen herkömmlichen Vorkammerzündkerzen sind die Überströmkanäle durch Bohrungen erzeugt, welche senkrecht auf das Vorkammergehäuse gebildet werden. In diesem Fall ist die Bohrungsachse parallel zur Flächennormalen der Gehäuseinnenseite und demnach ist der Azimutwinkel 0°. Solche Vorkammerzündkerzen sind beispielsweise bekannt aus DE 10 2012 022 872 A1, DE 10 2013 210 125 A1 und DE 10 2011 012 528 B3.

Wie oben erläutert, ist die Orientierung der Überströmkanäle entscheidend für die Flammenausbreitung in einem umgebenden Brennraum und für eine möglichst vollständige Entleerung des Innenraums der Vorkammerzündkerze nach einem Zündvorgang. Außer den oben genannten bekannten Vorkammerzündkerzen, bei denen die Orientierung der Überströmkanäle durch einen Azimutwinkel von 0° bestimmt ist, sind auch Vorkammerzündkerzen bekannt, deren Überströmkanäle möglichst tangential in den Innenraum des Vorkammergehäuses einmünden sollen, womit der Azimutwinkel nah an 90° liegt. Eine solche Vorkammerzündkerze ist beispielsweise in Fig. 4 von EP 1 143 126 A2 dargestellt und in DE 10 2005 017 186 A1 beschrieben.

Analog zu der vorausgegangenen Beschreibung einer gattungsgemäßen Vorkammerzündkerze ist bei einem gattungsgemäßen Verfahren zum Betreiben einer Vorkammerzündkerze vorgesehen, dass ein Kraftstoffgemisch in einen Innenraum, der durch ein Vorkammergehäuse der Vorkammerzündkerze gebildet wird, eingeleitet wird. Das Kraftstoffgemisch wird im Innenraum durch eine Zündeinrichtung entzündet. In dem Vorkammergehäuse sind mehrere Überströmkanäle gebildet, welche jeweils von einer Gehäuseinnenseite bis zu einer Gehäuseaußenseite verlaufen und so den Innenraum mit einem umgebenden Brennraum verbinden. Über die Überströmkanäle erfolgt eine Flammenausbreitung in den umgebenden Brennraum und verbranntes Kraftstoffgemisch wird zumindest teilweise über die Überströmkanäle abgeführt, das heißt in den umgebenden Brennraum abgelassen.

Als eine Aufgabe der Erfindung kann angesehen werden, eine Vorkammerzündkerze und ein Verfahren zum Betreiben einer Vorkammerzündkerze anzugeben, womit eine möglichst vollständige Verbrennung eines Kraftstoffgemisches und eine möglichst vollständige Entleerung des Innenraums der Vorkammerzündkerze nach einem Zündvorgang ermöglicht werden.

Diese Aufgabe wird durch die Vorkammerzündkerze mit den Merkmalen des Anspruchs 1 und durch das Verfahren mit den Merkmalen des Anspruchs 7 gelöst.

Vorteilhafte Varianten der erfindungsgemäßen Vorkammerzündkerze und des erfindungsgemäßen Verfahrens sind Gegenstand der abhängigen Ansprüche und werden außerdem in der folgenden Beschreibung erläutert.

Bei der Vorkammerzündkerze der oben genannten Art und bei dem vorgenannten Verfahren beträgt erfindungsgemäß der Azimutwinkel zwischen 15° und 42° und der Polarwinkel beträgt zwischen 50° und 70°.

Bei einer Variante der Erfindung beträgt der Azimutwinkel zwischen 20° und 40°, insbesondere zwischen 25° und 35°.

Der Polarwinkel beträgt bei einer Erfindungsvariante zwischen 55° und 65°.

Vorarbeiten zur Erfindung haben gezeigt, dass eine Wirbelbildung im Innenraum der Vorkammerzündkerze wichtig ist für die Entleerung und die Flammenausbreitung. Es hat sich gezeigt, dass bessere Ergebnisse erzielt werden können, wenn die Überströmkanäle nicht etwa senkrecht auf die Gehäuseaußenseite des Vorkammergehäuses stehen, sondern unter dem vorgenannten Azimut- und Polarwinkel. Insbesondere durch Strömungsverhältnisse im Innenraum können hierdurch in kurzer Zeit weit ausgedehnte Flammenausbreitungen außerhalb der Vorkammerzündkerze erreicht werden. Außerdem werden solche Zirkulationsströme vermieden, welche beispielsweise nach einem Zündvorgang zu einem Zirkulieren von Abgasen im Innenraum der Vorkammerzündkerze führen; hingegen wird durch die Orientierung der Überströmkanäle erreicht, dass bei einem Unterdruck außerhalb der Vorkammerzündkerze in sehr kurzer Zeit die Gase aus dem Innenraum der Vorkammerzündkerze heraus strömen können.

Für die Strömungsverhältnisse im Innenraum der Vorkammerzündkerze ist auch die Anzahl der Überströmkanäle relevant. Vorzugsweise sind mindestens sechs Überströmkanäle vorhanden, vorzugsweise mindestens oder genau acht Überströmkanäle.

Das Vorkammergehäuse kann eine längliche Form haben, die eine Längsachse definiert. Als eine mittige Längsachse wird nachstehend eine Längsachse des Vorkammergehäuses bezeichnet, welche mittig oder zentral durch den Innenraum verläuft. Zur besseren Verständlichkeit wird gelegentlich auch auf Längsachsen der Vorkammerzündkerze Bezug genommen, die parallel aber verschoben zu dieser mittigen Längsachse sein können.

Die Überströmkanäle können symmetrisch um die mittige Längsachse des Vorkammergehäuses gebildet sein. So können die Überströmkanäle entlang einer Ringform angeordnet sein, wobei der Mittelpunkt dieses Rings auf der mittigen Längsachse liegt. Eine symmetrische Anordnung kann dadurch definiert sein, dass auf der Ringform benachbarte Überströmkanäle stets den gleichen Abstand zueinander haben. Sind acht Überströmkanäle vorhanden, können diese beispielsweise auf der Ringform in jeweils 45°-Abständen angeordnet sein.

Das längliche Vorkammergehäuse kann einen zylindrischen Abschnitt aufweisen, dessen Zylinderachse die mittige Längsachse definiert. Auf den zylindrischen Abschnitt folgt ein Endbereich des Vorkammergehäuses. Dieser Endbereich oder Endabschnitt kann zusammenlaufend / verjüngend gebildet sein, das heißt er weist einen kleiner werdenden Durchmesser auf. Vorzugsweise sind die Überströmkanäle an dem zusammenlaufenden Endabschnitt des Vorkammergehäuses gebildet. Dieser Endabschnitt ist also keine Zylinderfläche um die mittige Längsachse, sondern kann eine Kegelfläche um die mittige Längsachse sein. Dabei kann die Kegelfläche in einer Ebene, die parallel zur Längsachse verläuft, eine Gerade sein oder auch eine gebogene Kurve. In letzterem Fall hat der Endbereich eine rundliche oder gewölbte Form.

Eine Endfläche des Vorkammergehäuses (oder des Endabschnitts des Vorkammergehäuses), welche das Vorkammergehäuse in Längsrichtung begrenzt, kann entweder gewölbt oder eben sein. An dieser Endfläche ist bevorzugt ein weiterer Überströmkanal vorgesehen. Zur begrifflichen Unterscheidung zu den übrigen Überströmkanälen wird dieser als Axialüberströmkanal bezeichnet. Der Axialüberströmkanal kann auf der mittigen Längsachse liegen.

Damit der Azimutwinkel eines Überströmkanals eine Strömungsrichtung vorgibt, muss die Dicke des Vorkammergehäuses, das heißt die Abmessung von der Gehäuseinnenseite bis zur Gehäuseaußenseite, genügend groß sein. Zu große Dicken führen aber auch zu Nachteilen, beispielsweise zu einer unerwünscht schmalen Keulenform einer Flammenausbreitung; auch aus dem Innenraum würde ein Absaugen von verbranntem Gemisch erschwert, da in Bereichen, die nicht exakt auf der Bohrungsachse der Überströmkanäle liegen, nur eine schwächere Sogwirkung vorläge. Bei Vorkammerzündkerzen für Verbrennungsmotoren von beispielsweise Kraftfahrzeugmotoren oder Schiffsmotoren kann die Dicke zum Beispiel mindestens 0,8mm, vorzugsweise mindestens 1,5mm, und höchstens 3mm, vorzugsweise höchstens 2mm, betragen. Durch das Erzeugen einer Bohrung kann es zu einer Materialverdickung am Rand eines Überströmkanals kommen, wobei die vorgenannten Dicken an der dünnsten Stelle eines Rands eines Überströmkanals verstanden werden können.

Durch Entflammungen im Vorkammergehäuse treten in kürzester Zeit große Druck- und Temperatursprünge auf. Hierdurch kommt es zu starken Materialbelastungen des Vorkammergehäuses. Es drohen dadurch Verformungen und Beschädigungen des Vorkammergehäuses sowie der darin gebildeten Überströmkanäle. Damit die Ausrichtung und Wirkung der erfindungsgemäß gebildeten Überströmkanäle über lange Zeit erhalten bleibt, ist daher eine besonders hohe Stabilität und Festigkeit des Vorkammergehäuses angestrebt. Dies kann erreicht werden, indem das Vorkammergehäuse zumindest teilweise nitriert ist. Beim Nitrieren wird Stickstoff in das Metall, insbesondere in eine Oberflächenschicht des Metalls, eingebracht. Die Nitrierung kann im Rahmen einer Wärmebehandlung erfolgen. Durch die Nitrierung wird die Oberfläche härter und die Stabilität des Vorkammergehäuses steigt. Vorteilhafterweise können dadurch das Vorkammergehäuse und die darin gebildeten Überströmkanäle über lange Zeit formstabil bleiben. Nitriert ist vorzugsweise jedenfalls der Bereich des Vorkammergehäuses, welcher den Innenraum bildet, in dem sich die Zündeinrichtung befindet. Die Nitrierung kann sowohl an der Gehäuseinnenseite als auch an der Gehäuseaußenseite des Vorkammergehäuses vorgesehen sein. Je nach Herstellungsverfahren kann es auch kostengünstiger und dennoch wirkungsvoll sein, wenn allein die Gehäuseinnenseite nitriert ist. Für eine besonders gute Hitzebeständigkeit können Carbonitride zum Nitrieren verwendet werden. In diesem Fall wird das Nitrieren auch als Nitrocarburieren bezeichnet. Hierbei wird außer Stickstoff zumindest auch Kohlenstoff an das Metall des Vorkammergehäuses ein- oder aufgebracht. Anstelle einer Nitrierung kann grundsätzlich auch eine Härtung des Metalls des Vorkammergehäuses vorgesehen sein.

Die als zusätzliche Vorrichtungsmerkmale beschriebenen Eigenschaften der Erfindung sind auch als Varianten des erfindungsgemäßen Verfahrens aufzufassen, und umgekehrt.

Eine durch "im Wesentlichen" gekennzeichnete Aussage kann, soweit anwendbar, eine Abweichung bis zu 10% oder 10° bedeuten.

Weitere Vorteile und Merkmale der Erfindung werden nachstehend mit Bezug auf die beigefügten schematischen Figuren beschrieben. Hierin zeigen:
- Fig. 1: einen schematischen Längsschnitt eines Ausführungsbeispiels einer erfindungsgemäßen Vorkammerzündkerze;
- Fig. 2: einen schematischen Querschnitt der Vorkammerzündkerze aus Fig. 1;
- Fig. 3: eine schematische Aufsicht auf die Vorkammerzündkerze aus Fig. 1.

Gleiche und gleich wirkende Bestandteile sind in den Figuren in der Regel mit denselben Bezugszeichen gekennzeichnet.

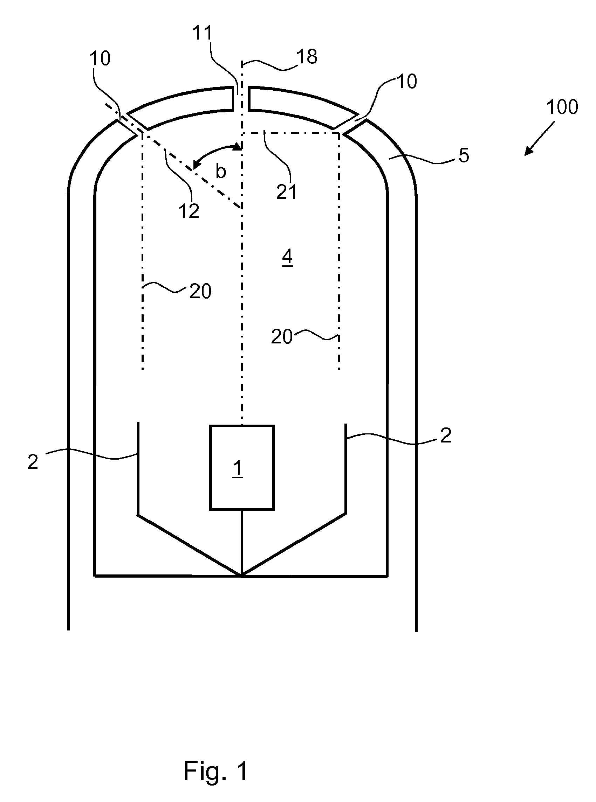

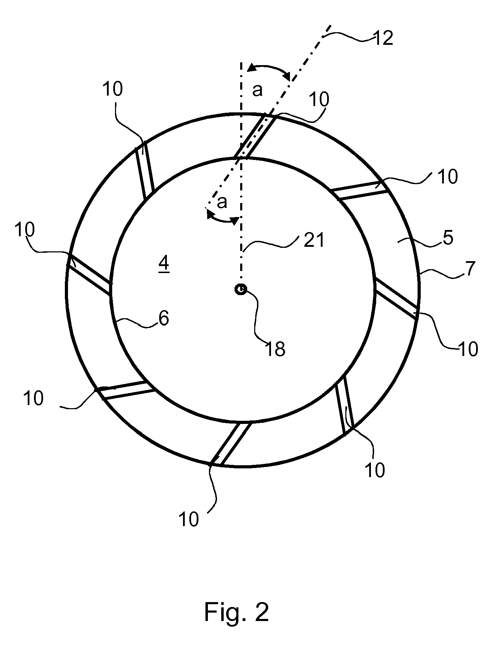

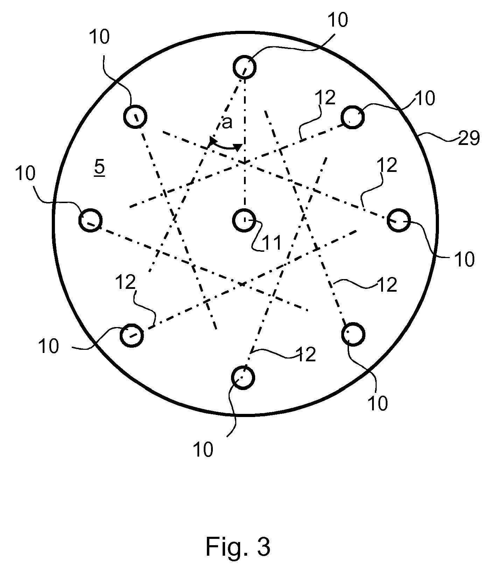

Ein Ausführungsbeispiel einer erfindungsgemäßen Vorkammerzündkerze 100 ist schematisch in den Figuren 1 bis 3 gezeigt. Fig. 1 zeigt einen Längsschnitt der Vorkammerzündkerze 100, das heißt einen Schnitt entlang einer Längsachse der Vorkammerzündkerze. Hingegen zeigt Fig. 2 einen Querschnitt der Vorkammerzündkerze 100, also einen Schnitt senkrecht zur Längsachse. Fig. 3 zeigt schließlich eine Aufsicht auf die Vorkammerzündkerze 100, ähnlich wie Fig. 2.

Die Vorkammerzündkerze 100 umfasst ein Vorkammergehäuse 5, in dem eine Zündeinrichtung 1, 2 aufgenommen ist. Die Zündeinrichtung ist im dargestellten Beispiel durch mehrere Elektroden 1 und 2 gebildet. Wird zwischen diesen eine Spannung angelegt, kann es zwischen ihnen zu einer Funkenbildung oder Funkenentladung kommen, womit ein Kraftstoffgemisch entzündet werden kann. Die Zündeinrichtung 1, 2 kann alternativ aber auch in anderer Weise gebildet werden, so lange hiermit ein Kraftstoffgemisch entzündet werden kann, beispielsweise mit Hilfe eines Lasers.

Das Vorkammergehäuse 5 hat eine längliche Form, durch welche eine Längsachse definiert wird. In Fig. 1 ist eine mittige Längsachse 18 eingetragen, welche in der Mitte eines zylinderförmigen Abschnitts des Vorkammergehäuses 5 verläuft. In der folgenden Beschreibung wird zur besseren Verständlichkeit auch auf Längsachsen 20 eingegangen, welche parallel aber verschoben zu der mittigen Längsachse 18 sind (siehe Fig. 1).

Das Vorkammergehäuse 5 definiert einen Innenraum 4, in welchem insbesondere die Zündeinrichtung 1, 2 angeordnet ist. Eine Innenwand des Vorkammergehäuses 5, welche dem Innenraum 4 zugewandt ist, wird nachstehend als Gehäuseinnenseite 6 bezeichnet. Hingegen wird die nicht zum Innenraum 4 zeigende Seite des Vorkammergehäuses 5 als Gehäuseaußenseite 7 bezeichnet.

Das längliche Vorkammergehäuses 5 hat eine Montageseite (in Fig. 1 unten), an welcher die Vorkammerzündkerze im Betrieb an einem Verbrennungsmotor befestigt ist. Das der Montageseite gegenüberliegende Ende des Vorkammergehäuses 5 (in Fig. 1 oben) wird nachstehend als Endbereich bezeichnet. Im Endbereich weist das Vorkammergehäuse 5 mehrere Überströmkanäle 10 und vorzugsweise einen Axialüberströmkanal 11 auf, welche den Innenraum 4 mit einer Umgebung der Vorkammerzündkerze 100 verbinden. Im Betrieb der Vorkammerzündkerze ist die Umgebung der Brennraum eines Verbrennungsmotors.

Der Axialüberströmkanal 11 ist ein Überströmkanal, dessen Bohrungsachse im Wesentlichen axial, das heißt parallel zur Längsachse 18, 20 verläuft. Der Axialüberströmkanal 11 kann insbesondere mittig im Endbereich angeordnet sein, also insbesondere auf der mittigen Längsachse 18 liegen.

Die Überströmkanäle 10 hingegen können kreisförmig angeordnet sein, insbesondere kreisförmig um den Axialüberströmkanal 11. Wie in Fig. 2 dargestellt, kann es bevorzugt sein, acht Überströmkanäle 10 vorzusehen. Eine andere Anzahl ist grundsätzlich möglich. Das Vorkammergehäuse 5 kann einen kreisförmigen oder runden Querschnitt aufweisen, zumindest in einem Abschnitt, in dem die Überströmkanäle 10 gebildet sind, wie in Fig. 2 gezeigt.

Die Anordnung und Ausrichtung der Überströmkanäle 10 ist entscheidend für die Wirksamkeit der Vorkammerzündkerze. Insbesondere bestimmt die Ausrichtung der Überströmkanäle 10, wie sich Flammen durch die Überströmkanäle 10 in den umgebenden Brennraum ausbreiten. Außerdem müssen nach einer Zündung die durch die Verbrennung des Kraftstoffgemisches entstehenden Abgase aus dem Innenraum 4 durch die Überströmkanäle 10 entweichen. Hierbei bestimmen geometrische Eigenschaften der Überströmkanäle 10 maßgeblich, ob Abgase weitgehend vollständig aus dem Innenraum 4 entfernt werden können.

Durch die erfindungsgemäß vorgesehene Ausrichtung der Überströmkanäle 10 ist eine besonders effiziente Flammenausbreitung in einen umgebenden Brennraum möglich, womit dort ein Kraftstoffgemisch besonders schnell und dadurch weitgehend vollständig verbrannt werden kann, und eine Entleerung des Innenraums 4 nach einen Zündereignis ist weitgehend vollständig möglich.

Die hierzu vorgesehene Ausrichtung der Überströmkanäle 10 wird nachstehend beschrieben. Hierbei wird auf einen einzigen Überströmkanal 10 eingegangen, wobei die übrigen Überströmkanäle 10 in gleicher Weise ausgerichtet sind. Insbesondere können die Überströmkanäle zueinander spiegel- oder punktsymmetrisch zur mittigen Längsachse 18 sein.

Die Ausrichtung eines Überströmkanals 10 wird im Folgenden durch einen Azimutwinkel a und einen Polarwinkel b beschrieben. Der Azimutwinkel a ist in einer Ebene senkrecht zur Längsachse 18, 20 definiert, das heißt in der Papierebene von Fig. 2. Jeder Überströmkanal 10 hat eine Bohrungsachse 12, welche eine Longitudinalachse dieses Überströmkanals 10 angibt und mittig durch den Überströmkanal 10 verläuft. Erfindungsgemäß stehen die Überströmkanäle 10 nicht etwa senkrecht auf die Gehäuseinnenseite 6 und die Gehäuseaußenseite 7. Vielmehr steht die Bohrungsachse 12 schräg auf die Gehäuseinnenseite 6 und die Gehäuseaußenseite 7. Die Ausrichtung der Gehäuseinnenseite 6 kann durch einen Normalenvektor 21 (Fig. 2) beschrieben werden, das heißt eine Gerade, die senkrecht auf die Fläche der Gehäuseinnenseite 6 steht. Hierbei wird der Normalenvektor 21 an der Stelle betrachtet, an welcher die Bohrungsachse 12 die Gehäuseinnenseite 6 schneidet. Der Azimutwinkel a ist nun der Winkel zwischen der Bohrungsachse 12 und dem Normalenvektor 21. Hierbei ist zu berücksichtigen, dass der Azimutwinkel a in der Ebene senkrecht zur Längsachse 18 definiert ist, das heißt als Bohrungsachse 12 ist hier die Projektion der Bohrungsachse 12 auf diese Ebene anzusehen und als Normalenvektor 21 ist hier die Projektion des Normalenvektors 21 auf diese Ebene anzusehen. Der Normalenvektor 21 wird auch als Flächennormale 21 bezeichnet. Diese Gerade 21 kann alternativ auch definiert sein als Verbindungsgerade 21 von der mittigen Längsachse 18 zu der Stelle der Gehäuseinnenwand 6, an welcher die Bohrungsachse 12 die Gehäuseinnenwand 6 schneidet. Der Azimutwinkel a ist sodann der Winkel (in der Ebene senkrecht zur Längsachse) zwischen der Bohrungsachse 12 und der Verbindungsgeraden 21. Bei einem kreisförmigen Querschnitt des Vorkammergehäuses 5 sind die beiden vorgenannten Definitionen identisch.

Erfindungsgemäß beträgt der Azimutwinkel a zwischen 15° und 42°, insbesondere zwischen 20° und 40°, insbesondere zwischen 25° und 35°.

Hierdurch unterscheidet sich der Azimutwinkel entscheidend von bekannten Ausführungen. Beispielsweise beträgt der Azimutwinkel bei den tangential einmündenden Überströmkanälen aus Fig. 4 von EP 1 143 126 A2 knapp 90° oder jedenfalls einen deutlich größeren Wert als erfindungsgemäß angegeben.

Der erfindungsgemäß vorgesehene Polarwinkel b eines Überströmkanals 10 wird nun mit Bezug auf Fig. 1 beschrieben. Der Polarwinkel b gibt den Winkel zwischen der Bohrungsachse 12 und der Längsachse 18 oder 20 an. Zum leichteren Verständnis kann hier eine Längsachse 20 betrachtet werden, welche parallel zur mittigen Längsachse 18 verläuft und so verschoben ist, dass sie gerade die Bohrungsachse 12 an der Stelle schneidet, an welcher diese die Gehäuseinnenseite 6 schneidet.

Der Polarwinkel b kann in einer Ebene definiert sein, welche durch die Längsachse 18 und eine Verbindungsgerade 21 aufgespannt wird, wobei die Verbindungsgerade 21 von der mittigen Längsachse 18 zur Bohrungsachse 12 an der Gehäuseinnenseite 6 läuft. Somit kann für die Definition des Polarwinkels b als Bohrungsachse 12 die Projektion der Bohrungsachse 12 auf diese Ebene verstanden werden.

Der Polarwinkel b liegt bei erfindungsgemäßen Vorkammerzündkerzen zwischen 50° und 70°, insbesondere zwischen 55° und 65°.

Fig. 3 zeigt eine Aufsicht auf die Vorkammerzündkerze 100. Die Aufsicht zeigt den Endbereich der Vorkammerzündkerze 100. Durch die Verjüngung des Endbereichs ist dessen Umfang geringer als der Umfang 29 des dahinter liegenden zylinderförmigen Bereichs des Vorkammergehäuses 5. Weil sich die Überströmkanäle 10 am verjüngten Endbereich befinden, liegen die die Überströmkanäle 10 weiter innen (in Richtung der mittigen Längsachse) als der Umfang 29 des zylinderförmigen Bereichs. In Fig. 3 sind als gestrichelte Linien zudem die Bohrungsachsen 12 der Überströmkanäle 10 angegeben und ein Azimutwinkel a ist eingetragen. Es ist erkennbar, dass keine der Bohrungsachsen 12 auf die mittige Längsachse 18 zeigt. Vielmehr zeigt jede Bohrungsachse 12 in einer Ebene senkrecht zur Längsachse 18 im Wesentlichen auf eine andere, nicht benachbarte Bohrungsachse 12.

Mit der beschriebenen Orientierung und Anordnung der Überströmkanäle 10, 11 wird vorteilhafterweise eine besonders effiziente Zündkerze bereitgestellt, welche gegenüber der herkömmlichen Gestaltung von Überströmkanälen bekannter Zündkerzen eine verbesserte Entflammung und eine bessere Entleerung nach Zündung ermöglicht.

## Patentansprüche

1. Vorkammerzündkerze
mit einer Zündeinrichtung (1, 2) zum Entflammen eines Kraftstoffgemisches, mit einem Vorkammergehäuse (5), welches einen Innenraum (4) bildet, in welchem die Zündeinrichtung (1, 2) angeordnet ist,
mit mehreren Überströmkanälen (10), welche in dem Vorkammergehäuse (5) gebildet sind und jeweils von einer Gehäuseinnenseite (6) bis zu einer Gehäuseaußenseite (7) verlaufen und so den Innenraum (4) mit einer Umgebung der Vorkammerzündkerze verbinden,
wobei jeder Überströmkanal (10) eine jeweilige Bohrungsachse (12) hat, wobei ein Azimutwinkel (a) in einer Ebene senkrecht zu einer Längsachse (18, 20) des Vorkammergehäuses (5) definiert ist als ein Winkel der Bohrungsachse (12) zur Flächennormalen (21) der Gehäuseinnenseite (6),
wobei ein Polarwinkel (b) als Winkel zwischen der Längsachse (18, 20) des Vorkammergehäuses (5) und der Bohrungsachse (12) definiert ist,
**dadurch gekennzeichnet,**
**dass** der Azimutwinkel (a) zwischen 15° und 42° beträgt und
**dass** der Polarwinkel (b) zwischen 50° und 70° beträgt.

2. Vorkammerzündkerze nach Anspruch 1,
**dadurch gekennzeichnet,**
**dass** der Azimutwinkel (a) zwischen 20° und 40°, insbesondere zwischen 25° und 35°, beträgt und
**dass** der Polarwinkel (b) zwischen 55° und 65° beträgt.

3. Vorkammerzündkerze nach Anspruch 1 oder 2,
**dadurch gekennzeichnet,**
**dass** mindestens sechs Überströmkanäle (10), vorzugsweise mindestens acht Überströmkanäle (10), vorhanden sind.

4. Vorkammerzündkerze nach einem der Ansprüche 1 bis 3,
**dadurch gekennzeichnet,**
**dass** die Überströmkanäle (10) symmetrisch um eine mittige Längsachse (18) des Vorkammergehäuses (5) gebildet sind.

5. Vorkammerzündkerze nach einem der Ansprüche 1 bis 4,
**dadurch gekennzeichnet,**
**dass** die Überströmkanäle (10) an einem zusammenlaufenden Endabschnitt des Vorkammergehäuses (5) gebildet sind.

6. Vorkammerzündkerze nach einem der Ansprüche 1 bis 5,
**dadurch gekennzeichnet,**
**dass** das Vorkammergehäuse (5) zumindest teilweise nitriert ist.

7. Verfahren zum Betreiben einer Vorkammerzündkerze,
wobei ein Kraftstoffgemisch in einen Innenraum (4), der durch ein Vorkammergehäuse (5) der Vorkammerzündkerze gebildet wird, eingeleitet wird, wobei das Kraftstoffgemisch im Innenraum durch eine Zündeinrichtung (1, 2) entzündet wird,
wobei in dem Vorkammergehäuse (5) mehrere Überströmkanäle (10) gebildet sind, welche jeweils von einer Gehäuseinnenseite (6) bis zu einer Gehäuseaußenseite (7) verlaufen und so den Innenraum (4) mit einem umgebenden Brennraum verbinden,
wobei über die Überströmkanäle (10) eine Flammenausbreitung in den umgebenden Brennraum erfolgt und wobei verbranntes Kraftstoffgemisch zumindest teilweise über die Überströmkanäle (10) abgeführt wird,
wobei jeder Überströmkanal (10) eine jeweilige Bohrungsachse (12) hat, wobei ein Azimutwinkel (a) in einer Ebene senkrecht zu einer Längsachse (20) des Vorkammergehäuses (5) definiert ist als ein Winkel der Bohrungsachse (12) zur Flächennormalen (21) der Gehäuseinnenseite (6),
wobei ein Polarwinkel (b) als Winkel zwischen der Längsachse (20) des Vorkammergehäuses (5) und der Bohrungsachse (12) definiert ist,
**dadurch gekennzeichnet,**
**dass** der Azimutwinkel (a) zwischen 15° und 42° beträgt und dass der Polarwinkel (b) zwischen 50° und 70° beträgt.
